Europäisches Patentamt

European Patent Office

Office européen des brevets

(19)

(11)  EP 1 701 248 A1

(12)  EUROPEAN PATENT APPLICATION
published in accordance with Art. 158(3) EPC

(43) Date of publication:
13.09.2006  Bulletin 2006/37

(21) Application number: 05806215.9

(22) Date of filing: 10.11.2005

(51) Int Cl.:
*G06F 7/58* (2006.01)       *H03K 3/84* (2006.01)
*G09C 1/00* (2006.01)

(86) International application number:
PCT/JP2005/020610

(87) International publication number:
WO 2006/054476 (26.05.2006 Gazette 2006/21)

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 18.11.2004  JP 2004334738
20.05.2005  JP 2005148330

(71) Applicant: Niigata TLO Corporation
Niigata-shi,
Niigata 950-2181 (JP)

(72) Inventors:
• SAITOH, Yoshiaki
  Niigata, 9502101 (JP)
• MORO, Tomoko
  Kanagawa, 2530053 (JP)

(74) Representative: Katérle, Axel
Wuesthoff & Wuesthoff
Patent- und Rechtsanwälte
Schweigerstraße 2
81541 München (DE)

(54)  **RANDOM NUMBER GENERATING METHOD AND DEVICE**

(57)  It is an object of the present invention to provide, with simple and not expensive devices, a new method for generating random number with more perfectly disorder and a random number generator which is utilized in the generating method of random number. In this point of view, a noise or a signal oscillated from an oscillator is input into an A/D converter. Then, numbers of "0" and "1" are allotted at lower bit rank to output signals from the A/D converter to generate a binary random number. Then, the binary random number is divided by a given digit number to generate an n-scaled random number.

# FIG. 2

**Description**

Field of the Invention:

This invention relates to a method for generating random number and a random number generator.

Description of the related art:

Random number which is perfectly in disorder and has uniform frequency of appearance is widely available in numerical simulation for social phenomenon, physical phenomenon and the like. The random number also plays an important role in cryptograph, and get a lot of attention in information security field. At present, various generating methods of random number are researched and developed, but can almost generate only pseudorandom number on software algorithm.

As of now, the algorithmic generating method of random number is widely available on a certain level of reliability and high speed random number generation. Generally, however, since the computer can generate only finite range of information, the random number generated by the computer has a given periodicity. Therefore, in numerical simulation, precise solution can not be obtained and in information security, sufficient security can not be realized. In this point of view, random number with more perfect disorder is desired.

Recently, with the development of processing speed and reliability in hardware, a physical generating method of random number has been developed. For example, it is known that random number which is generated on physical phenomenon such as thermoelectron noise or radioactive decay has low predictability to be ideal. However, the physical generating method requires large scaled devices for generating the random number.

(Summery of the Invention)

(Problem to be Solved by the Invention)

It is an object of the present invention to provide, with simple and not expensive devices, a new method for generating random number with more perfectly disorder and a random number generator which is utilized in the generating method of random number.

For achieving the above object, this invention relates to a method for generating random number, comprising the steps of:

> inputting a noise or a signal oscillated from an oscillator into an A/D converter,
> allotting numbers of "0" and "1" to output signals from said A/D converter to generate a binary random number, and
> dividing said binary random number by a given digit number to generate an n-scaled random number.

This invention also relates to a random number generator comprising:

> an oscillator for oscillating a noise or a signal,
> an A/D converter for converting said noise or said signal, and
> a calculator for allotting numbers of "0" and "1" to output signals from said A/D converter to generate a binary random number and
> dividing said binary random number by a given digit number to generate an n-scaled random number.

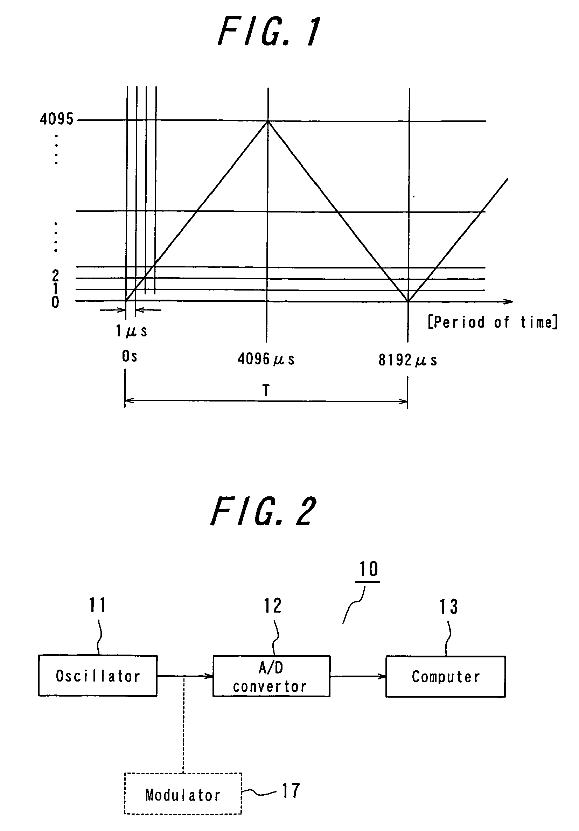

The present invention will be described with a concrete embodiment using a binary number A/D converter of 12 bits length and a triangular wave generated by a quartz oscillator. If all of the 12 bits length of the A/D converter are employed, the waveform amplitude of the triangular wave is divided into $2^{12}=4096$ (steps). Suppose that the sampling frequency is set to 1MHz, since the sampling period is $1\mu s$, the requirement for outputting the bits from the A/D converter in number of 0, 1, 0, 1 $\cdots$ alternately is to provide a waveform with a frequency of about 122Hz according to the equations (1) and (2) (see, Fig. 1).

$$T = 1[\mu s] \times 4096 \times 2 = 8192[\mu s] \qquad (1)$$

$$f = \frac{1}{T} = \frac{1}{8192[\mu s]} = 122.1[Hz] \qquad (2)$$

In order to render the bits outputted from the A/D converter a random number, an amplitude variation with one step at minimum is required at a given time. In the case that the amplitude variation is substituted with a period of time variation, in order to render the bits a random number, a period of time variation of $1\mu s$ at minimum, which corresponds to a sampling frequency, is required. In this case, it is required that the period of time variation is set to about $122 \times 10^{-6}$ seconds according to the equation (3).

$$\frac{1[\mu s]}{8192[\mu s]} = 122 \times 10^{-6} \qquad (3)$$

In the case that the period of time variation is substituted for a frequency variation, since a frequency is in inverse proportion to a period of time, in order to render the bits a random number, a frequency variation ratio of about $122 \times 10^{-6}$ is required according to the equation (4).

$$(1 + 122 \times 10^{-6})^{-1} \cong 1 - 122 \times 10^{-6} \qquad (4)$$

The above concrete wherein the sampling period of time is set to $1\mu s$ and the bit length is set to 12 bits is generalized such that the sampling period of time is set to 1 s and the bit length is set to n bits. In this case, the equation (2) can be rewritten by the equation (5).

$$f = \frac{10^6}{l \cdot 2^{(n+1)}} [Hz] \qquad (5)$$

When the frequency of a signal becomes large than the frequency represented by the equation (5), the frequency variation ratio, which is required for generating a random number and represented by the equation (4), also becomes large. Therefore, when the frequency variation ratio becomes large than the frequency stability of the quartz oscillator, the bits of the signal converted by the A/D converter becomes random such that the number "0" and "1" are alternately arranged. In this case, if the number of "0" or "1" is allotted to the number "0" and the number of "1" or "0" is allotted to the number "1", a binary random number can be generated. In the present invention, the binary random number is divided by a given digit number, thereby generating an n-scaled random number corresponding to the digit number.

In other words, if the A/D converter is utilized and the signal with a higher frequency from the oscillator is input into the A/D converter, the binary random number can be generated through A/D conversion. As a result, the intended n-scaled random number can be generated.

In a preferred embodiment, bits at a bottom bit rank of the output signals are employed. In this case, the output signals from the oscillator can be more random so that the binary random number can become more random. As a result, the random degree of the n-scaled random number, which is generated by dividing the binary random number, can be developed.

In another preferred embodiment, the output signals are modulated in at least one selected from the group consisting of frequency, phase and amplitude with a given modulator. In this case, the output signals themselves become random to some degree so that the output signals from the A/D converter can be more random. As a result, the random degrees of the binary random number and thus, the intended n-scaled random number can be more developed.

The A/D converter can be a binary scaled A/D converter. In this case, a number "0" or "1" is allotted to a number "0" of the output signals and a number "1" or "0" is allotted to a number "1" of the output signals, thereby generating the binary random number.

The A/D converter can be an m-scaled A/D converter (m is an even number not less than four). In this case, a number "0" or "1" is allotted to an odd number of the output signals and a number "1" or "0" is allotted to an even number of the output signals, thereby generating the binary random number.

The A/D converter can be an m-scaled A/D converter (m is an odd number not less than three). In this case, numbers within a range of "0" to "m-2" of the output signals are employed so that a number "0" or "1" is allotted to an odd number of the output signals and a number "1" or "0" is allotted to an even number of the output signals, thereby generating the binary random number. Then, numbers within a range of "1" to "m-1" of the output signals are employed so that a number "0" or "1" is allotted to an odd number of the output signals and a number "1" or "0" is allotted to an even number of the output signals, thereby generating the binary random number.

(Effect of the Invention)

As described above, according to the present invention can be provided, with simple and not expensive devices, a new method for generating random number with more perfectly disorder and a random number generator which is utilized in the generating method of random number.

(Brief Description of the Drawings)

Fig. 1 is a view illustrating a triangular wave oscillated from an oscillator.
Fig. 2 is a schematic diagram illustrating a random number generator according to the present invention.
Fig. 3 is a schematic diagram illustrating another random number generator according to the present invention.
Fig. 4 is a circuit diagram of a noise generator to be employed in the random generator illustrated in Fig. 3.
Fig. 5 is a graph showing the relation between the oscillating frequency and the screening test-passing ratio on the oscillator.
Fig. 6 is another graph showing the relation between the oscillating frequency and the screening test-passing ratio on the oscillator.
Fig. 7 is a graph showing the relation between the sampling frequency and the screening test-passing ratio.
Fig. 8 is a circuit diagram of a multiplying circuit to be employed in the present invention.
Fig. 9 is a graph illustrating the screening test-passing ratio using the multiplying circuit of Fig. 8.

[Explanation of the Reference numerals]

| 10, 20 | random number generator |
| 11 | oscillator |
| 12, 22 | A/D converter |
| 13, 23 | computer |
| 17, 27 | modulator |
| 21 | shot noise generating circuit |
| 24 | DC power supply |

[Best Mode for Carrying Out the Invention]

This invention will be described in detail with reference to the accompanying drawings.

Fig 2 is a schematic diagram illustrating a random generator according to the present invention. In Fig. 2, the random number generator 10 includes an oscillator 11 as a signal generating means, an A/D converter 12 and a computer 13. The oscillator 11 oscillates a triangular wave or a sine wave, for example, which is input into the A/D converter 12 to be outputted through A/D conversion. As the oscillator can be exemplified a quartz oscillator, an LC oscillator or a CR oscillator.

The A/D converter 12 can be employed as a one of m scale commercially available. If the A/D converter 12 is composed of a binary scaled one, the A/D converter can output binary scale data. If the A/D converter 12 is composed of a m-scaled one (m=3), the A/D converter can output m scale data ("0" through "m-1").

In the use of the binary scaled A/D converter is employed, therefore, if the number "0" or "1" is allotted to the output number "0" and the number "1" or "0" is allotted to the output number "1", a given binary random number can be generated. In this case, when the binary random number is divided by a given digit number, a given n scaled random number can be generated corresponding to the digit number.

In the use of the m=2n (n is an integer not less than 2), that is, even number not less than 4 scaled A/D converter is employed, therefore, if the number "0" or "1" is allotted to the output odd number and the number "1" or "0" is allotted to the output even number, the binary number system can be generated. In this case, when the binary number system is divided by a given digit number as mentioned above, a given n scaled random number can be generated corresponding to the digit number.

In the use of the m=2n-1 (n is an integer not less than 2), that is, odd number not less than 3 scaled A/D converter is employed, therefore, if the number "0" or "1" is allotted to the output odd number and the number "1" or "0" is allotted to the output even number, the binary random number can be generated. In this case, when the binary random number is divided by a given digit number as mentioned above, a given n scaled random number can be generated corresponding to the digit number.

In the use of odd number not less than 3, the output numbers from "1" to "m-1" can be employed. In this case, if the number "0" or "1" is allotted to the output odd number and the number "1" or "0" is allotted to the output even number, the binary number system can be generated.

Irrespective of type of the A/D converter 12 such as a binary scaled A/D converter and an m-scaled A/D converter, the A/D converter 12 outputs a plurality of bits. Therefore, any type of output number series such as the combination of "0" number and "1" number on the binary scaled A/D converter, odd number and even number on the m-scaled number, and numbers from "0" to "m-1" can be employed.

Particularly, it is desired to employ the bottom ranked bits from the output numbers. Since the bottom ranked bits fluctuate largely, the random degree of a random number composed of the bottom ranked bits becomes large. As a result, the random degree of the n-scaled random number which is generated by dividing the binary random number by a given digit number can be enhanced.

The selection of the bottom ranked bits, the generation of the binary random number and the generation of the intended n-scaled random number are performed at the computer 13 which is provided at the rear side of the A/D converter 12.

Instead of the bottom ranked bits, a plurality of bits which are ranked at given positions may be employed through the fluctuation with time. A concrete embodiment will be described hereinafter.

The output numbers from the A/D converter are represented by the number series of r0, r1, r2, · · · from the bottom rank to a given rank, and the periods of time are represented by the periods of time series of t0, t1, t2, t3 · · ·. In this case, the output numbers at the bottom rank corresponding to the periods of time t0, t1, t2, t3 · · · can be represented by the number series of r0,0, r0,1, r0,2, r0,3 · · ·. Then, the output numbers at the rank next to the bottom rank corresponding to the periods of time t0, t1, t2, t3 ··· can be represented by the number series of r1,0, r1,1, r1,2, r1,3 · · ·. The above-described random number-generating method is directed at generating the binary random number on the basis of the "0" or "1" rule. At present, even though the frequency of a LC oscillator is set to 3MHz and the sampling rate of the A/D converter is set to 20MHz, the random number generated according to the present invention can pass the random number screening test for statistical secret code FIPS 140-2 in NIST (National Institute of Standards and Technology, FIPS: Federal information Processing Standards) with a probability 100. Therefore, twenty millions random number safe for secret codes can be generated per one second in principle.

Moreover, the intended random number can be generated at the corresponding digit rank on the basis of the above-described method by selecting some output numbers at a plurality of digit ranks (m) from the A/D converter. In this case, the intended binary random numbers for secret codes can be generated at a rate m times as large as a rate using output numbers at one digit rank. For example, if m is set to three, three binary random numbers can be generated for a given period of time: One is a binary random number corresponding to r0,0, r0,1, r0,2, r0,3 · · ·, and the other one is a binary random number corresponding to r1,0, r1,1, r1,2, r1,3 · · ·, and the other one is a binary random number corresponding to r2,0, r2,1, r2,2, r2,3 · · ·. In this embodiment, therefore, the three times binary random numbers can be generated.

In addition, the intended random number can be generated through the combination of the output numbers r0n, r1n, r2n, · · · rmn at m digit ranks at a given period of time tn. In this case, the m random numbers can be generated according to the m digit ranks, which are m times as much as in the use of one digit rank at a given period of time. If the combination of output numbers is varied according to the variation in combination of the digit ranks, the resultant random number can pass the random number screening test for statistical secret code FIPS 140-2 at a higher possibility. For example, the combination of output numbers may be varied with time. The intended random number in more disorder can be generated by the selection of the digit ranks in addition to the variation in combination of the digit ranks.

In the present invention, a modulator 17 may be provided between the oscillator 11 and the A/D converter 12 as designated by the broken lines in Fig. 2. As the modulator can be exemplified a frequency modulator, a phase modulator and an amplitude modulator.

In the use of the frequency modulator, the phase modulator and the amplitude modulator, a signal from the oscillator 11 is modulated in frequency, phase or amplitude. In this case, since the signal from the oscillator can be render randomly, the resultant output numbers becomes more random through the A/D converter 12. Therefore, the random degree of the binary random number on the "0" or "1" rule, and thus, the intended n-scaled random number can be enhanced.

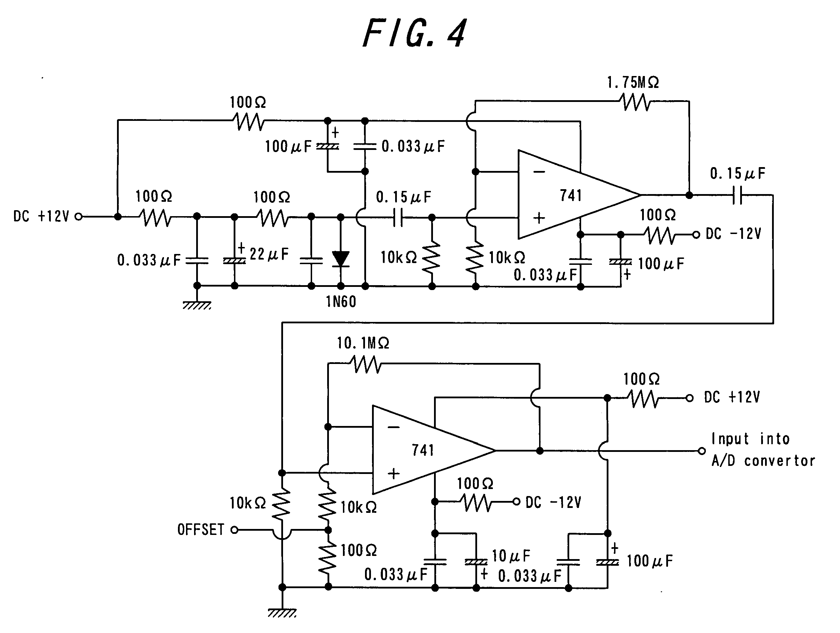

The frequency modulator, the phase modulator and the amplitude modulator can be selected from the ones disclosed in "Electric circuit", Sakuraba Ichiro, published by MORIKITA publishing company. Concretely, the frequency modulator may include a modulator with an LC oscillating circuit. The phase modulator may include a modulator with a given phase circuit. The amplitude modulator may include a modulator with a base modulating circuit or a collector modulating circuit. As an input signal for the modulator, a sine wave, triangular wave can be used. An output signal from the shot noise generating circuit in Fig.4 also can be used. Other input signal for the modulator is a D/A converter analog output signal with various digital input signals. The digital signal may be composed of a physical random number or a mathematical formula random number. The digital signal may be also composed of a signal such as sound, musical instrument, electronic instrument, image or a file such as text file which is output in chronological order, and digital signals at a given position of the circuits of a computer.

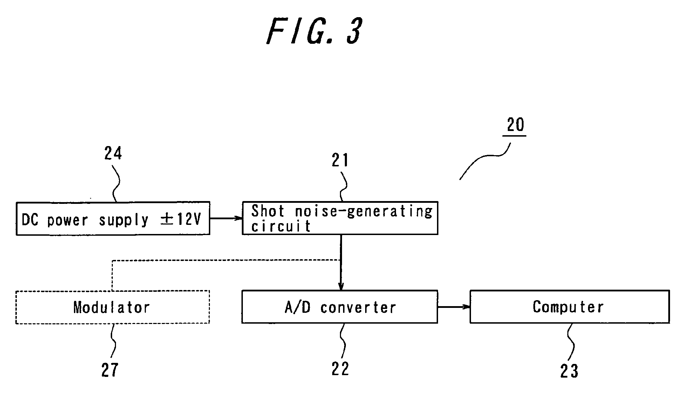

Fig. 3 is a schematic diagram illustrating another random number generator according to the present invention. In Fig. 3, the random number generator 20 includes a DC power supply 23, a shot noise generating circuit 21, an A/D converter 22 and a computer 23. The A/D converter 22 may be composed of an A/D converter of binary scale or m scale (m is an even number not less than 4 or an odd number not less than 3) as in Fig. 1. The computer 23 may be composed of a similar one to the computer 13. The shot noise generating circuit 21 may be composed of the one as illustrated in Fig. 4. In this embodiment, the DC power supply 24 and the shot noise generating circuit 21 constitutes an oscillator.

In the random number generator illustrated in Fig. 3, a DC voltage of $\pm 12$V is applied to the shot noise generating circuit 21. In this case, a noise is oscillated from the shot noise generating circuit 21, and input into the A/D converter 22 to output some numbers.

The type of output numbers from the A/D converter 22 depends on the type of the A/D converter 22. In the use of the binary scaled A/D converter, the output numbers are "0" or "1" , thereby generating a binary random number and thus, generating an n-scaled random number by division. In the use of the m-scaled A/D converter, the output numbers are within a range of "0" and "m-1", thereby generating a binary random number by the allocation of number "0" or "1" and thus, generating an n-scaled random number by division.

In this embodiment, it is desired to use the bits at the bottom rank among from the bits output from the A/D converter 22 as described in the previous embodiment. Moreover, it is desired to provide a modulator 27 designated by the broken line in Fig. 3 so as to render the random number more disorder as described in the embodiment relating to Fig. 1.

The modulator 27 may be composed of a similar one to the modulator 17. The shot noise generating circuit may be composed of another circuit except the one illustrated in Fig. 4. Moreover, another noise generating circuit may be employed instead of the shot noise generating circuit.

A D/A converter may be employed instead of the shot noise generating circuit as illustrated in Fig. 3 such that a signal is oscillated from the D/A converter and input into the A/D converter 22. In this case, a given computer is employed instead of the DC power supply 24, and the resultant digital signal is converted into an analog signal through the D/A conversion.

The digital signal may be composed of a physical random number or a mathematical formula random number. The digital signal may be also composed of a signal such as sound, musical instrument, electronic instrument, image or a file such as text file which is output in chronological order. Also, a digital signal at a given position of the circuit of the computer is input into the D/A converter such that the digital signal is converted into an analog signal.

In this way, if a signal from the computer is input into the D/A converter, the resultant signal may be rendered more disorder. Therefore, when the sampling rate is set to a slow one, the resultant signal may become a physical random number. If the resultant signal is employed as a modulating signal for another signal, a random signal in more disorder can be generated even though the sampling rate is set to higher one. As a result, when the signal combined with the modulating signal and another signal is input into the A/D converter, the output numbers at higher ranks can be used for generating the intended random number which can pass the screening test, so that the generating rate of random number can be enhanced.

In the embodiments relating to Figs. 1-3, the triangular wave and the sine wave from the oscillator, the noise signal from the sot noise generating circuit and the output signal from the D/A converter may be input into the A/D converter via a differentiating circuit or a highpass filter. In this case, since the high frequency component of the signal such as the triangular wave, the noise signal can be taken out via the differentiating circuit or the highpass filter, the signal with large noise component can be generated and thus, input into the A/D converter. As a result, a random number in more disorder can be generated even using the bits at higher bit ranks so as to pass the screening test and at a higher rate.

(Example)

Hereinafter, the features, the advantages and the effect of the present invention will be described concretely with reference to Example. In this Example, the screening test for a random number generated is performed according to the statistical secret code FIPS 140-2 in NIST (National Institute of Standards and Technology) which is the severest screening test.

(Example 1)

<Random number generation using a quartz oscillator>

(1) Use of a triangular wave

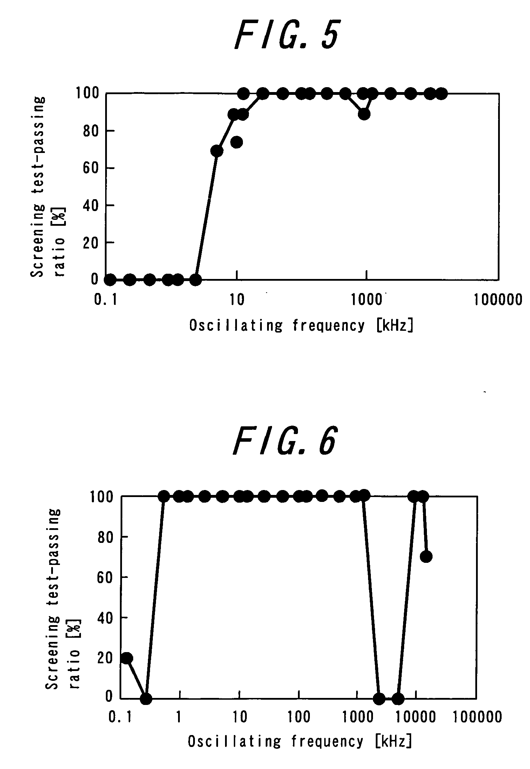

A quartz oscillator with a quartz crystal was employed (NF CORPORATION WAVE FACT ORY1946). Then, a triangular wave with an amplitude within a range of -4.95 and +4.95 was oscillated from the quartz oscillator, converted with a binary scaled A/D converter of 12 bits length and input into a computer. In this case, the sampling frequency was set to 1MHz. Fig. 5 is a graph showing the relation between the oscillating frequency and the screening test-passing ratio on the oscillator. The abscissa axis designates the oscillating frequency and the ordinate axis designates the screening test-passing ratio. As is apparent from Fig. 5, when the oscillating frequency is set to about 15kHz and over, almost 100% screening test-passing ratio can be established.

(2)Use of a sine wave

The same quartz oscillator as the one in (1) was employed so that a sine wave with an amplitude within a range of-4.95 and +4.95 was oscillated from the quartz oscillator. In this case, the sampling frequency was set to 1MHz. Fig. 6 is another graph showing the relation between the oscillating frequency and the screening test-passing ratio on the oscillator. As is apparent from Fig. 6, almost 100% screening test-passing ratio can be established at a lower oscillating frequency.

(Example 2)

<Random number generation using a shot noise-generating circuit>

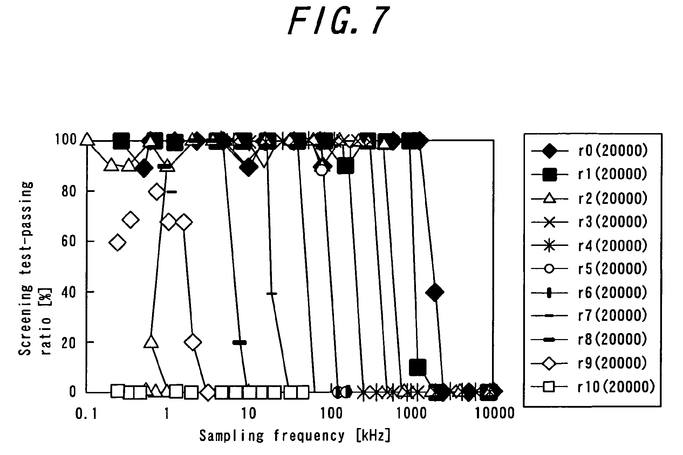

An output from the shot noise-generating circuit illustrated in Fig. 4 was converted with a binary scaled A/D converter of 12 bits length and input into a computer. The bit data were represented successively by r0, r1, r2 · · · from at the bottom bit rank to at a higher bit rank. The combination of 20,000 r0 was represented by r0(20000), and the combination of 20,000 r1 was represented by r1(20000). Other combinations for other bit data were also represented as in the same manner as r0 and r1. Fig. 7 is a graph showing the relation between the sampling frequency and the screening test-passing ratio for the data combination such as r0(20000) of shot noise. As is apparent from Fig. 7, almost 100% screening test-passing ratio can be established at a higher sampling frequency as a bit combination at a lower bit rank was employed. Almost 100% screening test-passing ratio can be established within a wide sampling frequency when the r0(20000) bit combination was employed.

Although the present invention was described in detail with reference to the above examples, this invention is not limited to the above disclosure and every kind of variation and modification may be made without departing from the scope of the present invention.

For example, a plurality of oscillators for oscillating noises or signals may be employed. In this case, since the combination of a plurality of noises or signals can be employed, the intended random number can be generated at a higher rate if the combination is input into the A/D converter.

The combination of noises or signals can be realized by adding, extracting or multiplying the noises or signals. If the combination is realized through multiplication, the screening test-passing ratio can be developed using bits at a higher bit rank than at a lower bit rank because the combination obtained through multiplication becomes more random.

For example, suppose that two sine waves are oscillated. If the sine waves have the respective frequencies f1 and f2, a signal output from the multiplying circuit has frequency components of 2f1, 2f2, f1+f2, f1-f2 in addition to f1 and f2. If the sine waves are set to noise signals, the signal output from the multiplying circuit can have many complicated frequency components because the sine waves themselves have the respective noise components. As a result, the screening test-passing ratio can be developed using bits at a most higher bit rank than at a lower bit rank.

If three or more oscillators for oscillating noises or signals are employed, the resultant signal can have more complicated frequency components through the multiplying circuit, so that the screening test-passing ratio can be easily developed using bits at a most higher bit rank than at a lower bit rank.

If a plurality of signals are modulated by a noise, the intended random number can be generated at a higher rate through the addition, extraction or multiplication.

In this way, since the bits at a higher bit rank can be used for generating a random number, the generating rate of the random number can be developed in accordance with the number of bit rank to be used. Generally, although the sampling frequency of an A/D converter is set to a ten times one as large as a normal one so as to develop the generating rate of the random number, the generation cost of the random number also becomes ten times one as high as a normal one. However, if the multiplying circuit is employed, the generation cost of the random number becomes a little bit high one.

As the multiplying circuit can be used an exclusive IC NJM1496. As the addition or extraction of signals or the like can be used a calculating amplifier (e.g., 741). As the addition of signals or the like at a higher frequency can be used a transistor or FET. In this case, a plurality of noises or signals are input directly into the transistor or FET.

The multiplication of signals or the like can be carried out using a mixer circuit with a multiplying circuit or a non-linear element. In this case, signals oscillated from the oscillator are applied to the non-linear element or the like to generate another signal with a frequency. In this case, since the multiplying circuit or the mixer circuit is employed, the resultant signal contains a modified wave signal, an adding wave signal, an extracting signal of the original signal in addition to the original signal. As a result, the random degree of the resultant signal becomes large in comparison with the one of the original signal. Then, the non-linear element can have a cubic and a biquadratic characteristics in addition to the square characteristic. Therefore, the resultant signal contains many frequency components which are not contained in the original signal, and thus, becomes more random.

Therefore, when the intended random number is generated through the A/D converter, the bits at a higher bit rank can be used such that the intended random number can pass the screening test, so that the generation rate of the random number can be more developed.

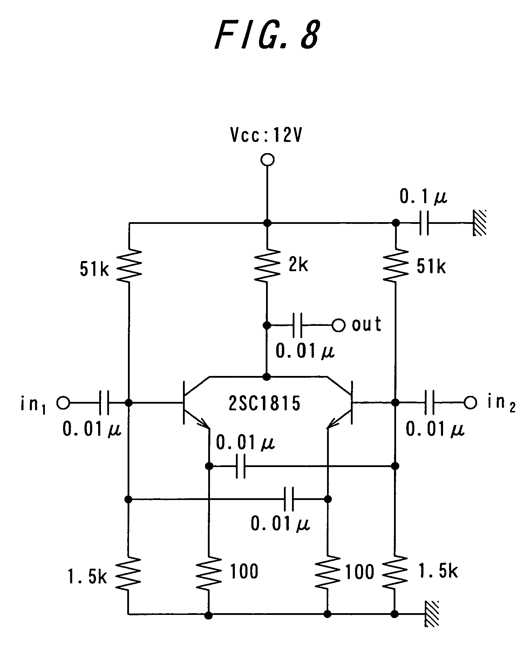

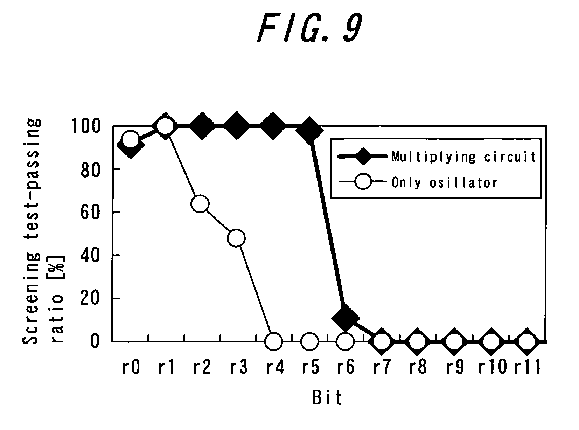

Fig. 8 is a circuit diagram of a multiplying circuit to be employed in the present invention, and Fig. 9 is a graph illustrating the screening test-passing ratio using the multiplying circuit of Fig. 8. As is apparent from Figs. 8 and 9, if the multiplying circuit illustrated in Fig. 8 is employed, the intended random number can pass the screening test even though the bits at a higher bit rank are employed.

As the non-linear element are exemplified a diode or a transistor, and as the mixer circuit are exemplified circuits driven at C class or B class amplifier. The B class drive or the C class drive is disclosed in "Electric circuit", Sakuraba Ichiro, published by MORIKITA publishing company.

(Industrially Applicable Field)

The random number-generating method and the random number generator according to the present invention will be applied for numerical simulation for social phenomenon, physical phenomenon and cryptograph technique in information security field.

**Claims**

1. A method for generating random number, comprising the steps of:

   inputting a noise or a signal oscillated from an oscillator into an A/D converter,
   allotting numbers of "0" and "1" to output signals from said A/D converter to generate a binary random number, and
   dividing said binary random number by a given digit number to generate an n-scaled random number.

2. The generating method as defined in claim 1, wherein said A/D converter is a binary scaled A/D converter, wherein a number "0" or "1" is allotted to a number "0" of said output signals and a number "1" or "0" is allotted to a number "1" of said output signals, thereby generating said binary random number.

3. The generating method as defined in claim 1, wherein said A/D converter is an m-scaled A/D converter (m is an even number not less than four), wherein a number "0" or "1" is allotted to an odd number of said output signals and a number "1" or "0" is allotted to an even number of said output signals, thereby generating said binary random number.

4. The generating method as defined in claim 1, wherein said A/D converter is an m-scaled A/D converter (m is an odd number not less than three), wherein numbers within a range of "0" to "m-2" of said output signals are employed so that a number "0" or "1" is allotted to an odd number of said output signals and a number "1" or "0" is allotted to an even number of said output signals, thereby generating said binary random number.

**5.** The generating method as defined in claim 1, wherein said A/D converter is an m-scaled A/D converter (m is an odd number not less than three), wherein numbers within a range of "1" to "m-1" of said output signals are employed so that a number "0" or "1" is allotted to an odd number of said output signals and a number "1" or "0" is allotted to an even number of said output signals, thereby generating said binary random number.

**6.** The generating method as defined in any one of claims 1-5, wherein bits at a bottom bit rank of said output signals are employed.

**7.** The generating method as defined in any one of claims 1-5, wherein bits at a plurality of bit ranks of said output signals are employed such that said binary random number is generated using the variation of some of said bits with time.

**8.** The generating method as defined in claim 7, wherein said binary random number is composed of a plurality of binary random numbers generated in accordance with the variation of some of said bits with time, thereby generating said n-scaled random number.

**9.** The generating method as defined in any one of claims 1-8, wherein a plurality of oscillators are employed as said oscillator such that output signals from said oscillators are combined and input into said A/D converter.

**10.** The generating method as defined in claim 9, wherein the combination of said output signals is carried out through addition, extraction or multiplication of said output signals.

**11.** The generating method as defined in claim 10, wherein said multiplication is carried out using a mixer circuit with a multiplying circuit, a non-linear circuit or a multiplying circuit itself.

**12.** The generating method as defined in any one of claims 1-8, wherein said oscillator oscillates at least one selected from the group consisting of a triangular wave, a sine wave, a shot noise and a D/A converting output signal.

**13.** The generating method as defined in claim 12, wherein said at least one selected from the group consisting of a triangular wave, a sine wave, a shot noise and a D/A converting output signal is input into said A/D converter via a differentiating circuit or a highpass filter.

**14.** The generating method as defined in any one of claims 1-13, wherein said output signals are modulated in at least one selected from the group consisting of frequency, phase and amplitude.

**15.** A random number generator comprising:

> an oscillator for oscillating a noise or a signal,
> an A/D converter for converting said noise or said signal, and
> a calculator for allotting numbers of "0" and "1" to output signals from said A/D converter to generate a binary random number and
> dividing said binary random number by a given digit number to generate an n-scaled random number.

**16.** The random number generator as defined in claim 15, wherein said A/D converter is a binary scaled A/D converter, wherein a number "0" or "1" is allotted to a number "0" of said output signals and a number "1" or "0" is allotted to a number "1" of said output signals, thereby generating said binary random number.

**17.** The random number generator as defined in claim 15, wherein said A/D converter is an m-scaled A/D converter (m is an even number not less than four), wherein a number "0" or "1" is allotted to an odd number of said output signals and a number "1" or "0" is allotted to an even number of said output signals, thereby generating said binary random number.

**18.** The random number generator as defined in claim 15, wherein said A/D converter is an m-scaled A/D converter (m is an odd number not less than three), wherein numbers within a range of "0" to "m-2" of said output signals are employed so that a number "0" or "1" is allotted to an odd number of said output signals and a number "1" or "0" is allotted to an even number of said output signals, thereby generating said binary random number.

**19.** The random number generator as defined in claim 15, wherein said A/D converter is an m-scaled A/D converter (m is an odd number not less than three), wherein numbers within a range of "1" to "m-1" of said output signals are employed so that a number "0" or "1" is allotted to an odd number of said output signals and a number "1" or "0" is allotted to an even number of said output signals, thereby generating said binary random number.

20. The random number generator as defined in any one of claims 15-19, wherein said A/D converter is configured such that bits at a bottom bit rank of said output signals are employed.

21. The random number generator as defined in any one of claims 15-20, wherein said A/D converter is configured such that bits at a plurality of bit ranks of said output signals are employed such that said binary random number is generated using the variation of some of said bits with time.

22. The random number generator as defined in claim 21, wherein said computer is configured such that said binary random number is composed of a plurality of binary random numbers generated in accordance with the variation of some of said bits with time, thereby generating said n-scaled random number.

23. The random number generator as defined in any one of claims 15-22, wherein a plurality of oscillators are employed as said oscillator such that output signals from said oscillators are combined and input into said A/D converter.

24. The random number generator as defined in claim 23, wherein the combination of said output signals is carried out through addition, extraction or multiplication of said output signals.

25. The random number generator as defined in claim 24, wherein said multiplication is carried out using a mixer circuit with a multiplying circuit, a non-linear circuit or a multiplying circuit itself.

26. The random number generator as defined in any one of claims 15-22, wherein said oscillator oscillates at least one selected from the group consisting of a triangular wave, a sine wave, a shot noise and a D/A converting output signal.

27. The random number generator as defined in claim 26, wherein said at least one selected from the group consisting of a triangular wave, a sine wave, a shot noise and a D/A converting output signal is input into said A/D converter via a differentiating circuit or a highpass filter.

28. The random number generator as defined in any one of claims 15-27, wherein said output signals are modulated in at least one selected from the group consisting of frequency, phase and amplitude.

## FIG. 1

## FIG. 2

# FIG. 3

# FIG. 4

EP 1 701 248 A1

## FIG. 5

## FIG. 6

# FIG. 7

# FIG. 8

Vcc : 12V

0.1 μ

51k

2k

51k

out

0.01 μ

in₁

2SC1815

in₂

0.01 μ

0.01 μ

0.01 μ

0.01 μ

0.01 μ

1.5k

100

100

1.5k

# *FIG. 9*

**INTERNATIONAL SEARCH REPORT**

| | International application No. |
|---|---|
| | PCT/JP2005/020610 |

A. CLASSIFICATION OF SUBJECT MATTER
*G06F7/58*(2006.01), *G09C1/00*(2006.01), *H03K3/84*(2006.01)

According to International Patent Classification (IPC) or to both national classification and IPC

B. FIELDS SEARCHED

Minimum documentation searched (classification system followed by classification symbols)
*G06F7/58*(2006.01), *G09C1/00*(2006.01), *H03K3/84*(2006.01)

Documentation searched other than minimum documentation to the extent that such documents are included in the fields searched
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 11-85472 A (Toshiba Corp.), 30 March, 1999 (30.03.99), Par. Nos. [0063] to [0080]; Figs. 1 to 3 & EP 903665 A2 Par. Nos. [0025] to [0049] | 1-28 |
| Y | US 2004/17235 A1 (KONINKLIJKE PHILIPS ELECTRONICS N.V.), 29 January, 2004 (29.01.04), Par. No. [0015] & WO 2004/12334 A2 Page 3, lines 2 to 22 | 1-28 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 December, 2005 (12.12.05) | 20 December, 2005 (20.12.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2005/020610 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2001-136053 A  (Oki Micro Design Co., Ltd.),<br>18 May, 2001 (18.05.01),<br>Par. Nos. [0010] to [0014]<br>& US 6340919 B1<br>Column 2, lines 1 to 65 | 1-28 |
| Y | JP 7-273613 A  (Nikoo-Electronics Co., Ltd.),<br>20 October, 1995 (20.10.95),<br>Par. No. [0015]<br>(Family: none) | 6,9-14,20,<br>23-28 |
| Y | JP 9-97170 A  (Nikoo-Electronics Co., Ltd.),<br>08 April, 1997 (08.04.97),<br>Par. No. [0020]<br>(Family: none) | 6,9-14,20,<br>23-28 |
| Y | JP 9-46136 A  (Sony Corp.),<br>14 February, 1997 (14.02.97),<br>Par. No. [0009]; Fig. 1<br>(Family: none) | 9,10,14,23,<br>24,28 |
| Y | JP 2002-41281 A  (President of Niigata<br>University),<br>08 February, 2002 (08.02.02),<br>Par. Nos. [0011] to [0013]<br>& EP 1197846 A2<br>Par. Nos. [0012] to [0014] | 9,10,13,14,<br>23,24,27,28 |
| Y | JP 2001-100980 A  (Mitsubishi Electric<br>Information Technology Centre Europe B.V.),<br>13 April, 2001 (13.04.01),<br>Par. No. [0023]; Fig. 4<br>& EP 1075084 A2<br>Par. No. [0020]; Fig. 4 | 9-11,14,<br>23-25,28 |
| Y | JP 11-509707 A  (Siemens AG.),<br>24 August, 1999 (24.08.99),<br>Page 3, line 19 to page 4, line 7<br>& WO 97/42706 A<br>Page 1, line 33 to page 2, line 23 | 14,28 |
| A | JP 2004-171549 A  (President of Niigata<br>University),<br>17 June, 2004 (17.06.04),<br>Full text<br>& EP 1418497 A2 | 1-28 |
| A | JP 2004-127217 A  (President of Niigata<br>University),<br>22 April, 2004 (22.04.04),<br>Full text<br>& EP 1387490 A1 | 1-28 |

Form PCT/ISA/210 (continuation of second sheet) (April 2005)

**EP 1 701 248 A1**

**INTERNATIONAL SEARCH REPORT**

International application No.

PCT/JP2005/020610

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2003-108364 A  (Toshiba Corp.),<br>11 April, 2003 (11.04.03),<br>Full text<br>(Family: none) | 1-28 |

Form PCT/ISA/210 (continuation of second sheet) (April 2005)